(19) Europäisches Patentamt
European Patent Office
Office européen des brevets

(11) **EP 1 777 248 A1**

(12) **EUROPEAN PATENT APPLICATION**
published in accordance with Art. 158(3) EPC

(43) Date of publication:
**25.04.2007 Bulletin 2007/17**

(51) Int Cl.:
*C08J 5/18* (2006.01)     *C08K 9/02* (2006.01)
*C08L 67/00* (2006.01)     *G02F 1/1335* (2006.01)
*C08L 101/16* (2006.01)     *C08L 67/04* (2006.01)

(21) Application number: **05766160.5**

(22) Date of filing: **19.07.2005**

(86) International application number:
**PCT/JP2005/013235**

(87) International publication number:
**WO 2006/009135 (26.01.2006 Gazette 2006/04)**

(84) Designated Contracting States:
**DE FR GB**

(30) Priority: **21.07.2004 JP 2004212511**
**11.11.2004 JP 2004327408**

(71) Applicant: **MITSUBISHI PLASTICS, INC.**
**Chiyoda-ku,**
**Tokyo 100-0005 (JP)**

(72) Inventors:
• **WATANABE, Takayuki**
**c/o Mitsubishi Plastics, Inc.**
**Nagahama-shi,**
**Shiga 5268660 (JP)**
• **NISHIDA, Miki**
**c/o Mitsubishi Plastics, Inc.**
**Nagahama-shi,**
**Shiga 5268660 (JP)**

• **KATSUHARA, KAZUNARI**
**c/o Mitsubishi Plastics, Inc.**
**Nagahama-shi,**
**Shiga 5268660 (JP)**
• **HIRUMA, Takashi**
**c/o Mitsubishi Plastics, Inc.**
**Nagahama-shi,**
**Shiga 5268660 (JP)**
• **TAKAGI, Jun**
**c/o MITSUBISHI PLASTICS, INC.**
**Nagahama-shi,**
**Shiga 5268660 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **REFLECTING FILM OF ALIPHATIC POLYESTER RESIN AND REFLECTOR**

(57)     [Problem] To provide an aliphatic polyester-based resin reflective film that has a good light reflecting property and does not undergo yellowing with a lapse of time when in use. [Means for solving] The aliphatic polyester-based resin reflective film is formed from a resin composition that contains an aliphatic polyester-based resin and a fine powder filler composed mainly of titanium oxide. The content of niobium in the titanium oxide is 500 ppm or less. Preferably, grains of the titanium oxide have a surface covered with at least one inert inorganic oxide selected from the group consisting of silica, alumina, and zirconia.

EP 1 777 248 A1

**Description**

TECHNICAL FIELD

The present invention relates to an aliphatic polyester-based resin reflective film, in particular, a reflective film for use in reflective plates in liquid crystal display devices, lighting equipment, illumination advertising displays and so on. The present invention also relates to a reflective plate that includes a metal plate, a resin plate or the like covered with the reflective film for use in liquid crystal display devises, lighting equipment, illumination advertising displays and so on.

BACKGROUND ART

In recent years, reflective films are used in the fields of a reflective plate for use in a liquid crystal display devise, a member for a projection screen or a planar light source, a reflective plate for a lighting equipment or an illumination advertising displays and so on. In the case of, for example, reflective plates in liquid crystal display devises, reflective films having high light reflectance are demanded in order to supply light to liquid crystals as much as possible to improve the performance of the backlight unit in response to the requirements of providing a larger screen of a liquid crystal device and higher displaying performance.

Examples of the reflective film that have been known include white sheets formed from aromatic polyester-based resin containing titanium oxide (cf., e.g., Patent Document 1). However, the conventional white sheets do not have such a high light reflectance as required. Another reflective film is known which is obtained by forming a sheet from an aromatic polyester-based resin and titanium oxide and then drawing the sheet to form voids therein, thus providing light scattering reflection (cf., e.g., Patent Document 2). However, the reflective films do not have such a high light reflectance as required. Further, the aromatic rings contained in the molecular chain of the aromatic polyester-based resin that forms the sheets absorb ultraviolet rays, thus causing a problem that the film is deteriorated and yellowed due to ultraviolet rays emitted from a light source of the liquid crystal display devices and so on, so that the light reflectance of the reflective film is decreased.

Further, in recent years, reflective films subjected to bending or the like processing are used by being incorporated into the liquid crystal display devices. In this case, the reflective film is required to have a shape retaining property with which the shape of being bent is retained. However, the conventional reflective films have poor shape retaining property.

Patent Document 1: Published Unexamined Japanese Patent Application No. 2002-138150
Patent Document 2: Published Unexamined Japanese Patent Application No. Hei 4-239540

DISCLOSURE OF THE INVENTION

PROBLEMS TO BE SOLVED BY THE INVENTION

The present invention has been achieved with a view to solving the above-mentioned problems and it is an object of the present invention to provide a reflective film that has an excellent light reflectance, that does not undergo yellowing with time when in use.

MEANS FOR SOLVING THE PROBLEMS

The reflective film of the present invention is formed from a resin composition that contains an aliphatic polyester-based resin and fine powder filler, wherein the fine powder filler is composed mainly of titanium oxide, wherein a content of niobium in the titanium oxide is 500 ppm or less.

Further, it is preferable that a surface of titanium oxide is covered with at least one inert inorganic oxide selected from the group consisting of silica, alumina, and zirconia.

Here, the titanium oxide covered with the inert inorganic oxide has a surface treatment amount of preferably 3 mass% or more and 9 mass% or less.

Further, it is preferable that the content of the fine powder filler is in a content of 10 mass% or more and 60 mass% or less based on the aliphatic polyester-based resin composition that contains the fine powder filler and the aliphatic polyester-based resin.

Further, the aliphatic polyester-based resin has a refractive index of preferably less than 1. 52 and in particularly, the aliphatic polyester-based resin is preferably a lactic acid-based resin.

It is preferable that the reflective film has voids therein such that its porosity is 50% or less.

Further, the reflective film is preferably obtained by melt-molding the aliphatic polyester-based resin composition containing the aliphatic polyester-based resin and the fine powder filler into a film and then drawing the film at least in one axial direction at a drawing ratio of 1.1-folds or more.

The reflective plate of the present invention is characterized by including the above-mentioned aliphatic polyester-based resin reflective film.

EFFECTS OF THE INVENTION

According to the present invention, a reflective film that has a high light reflecting property and that undergoes no yellowing with time can be obtained. Further, by covering a metal plate or a resin plate with the reflective film of the present invention, a reflective plate having a high light reflecting property for use in reflective plates in liquid crystal display devised, lighting equipment, illumination advertising displays and so on can be obtained.

BEST MODE FOR CARRYING OUT THE INVENTION

Hereinafter, the present invention will be explained in more detail. Note that in the present application, "films" may be understood as also including "sheets" and "sheets" may be understood as also including "films."

The aliphatic polyester-based resin reflective film of the present invention contains therein fine powder filler composed mainly of titanium oxide. Since titanium oxide has a high refractive index and when titanium oxide is used a greater difference in refractive index from the base resin can be obtained, the film can be imparted with a high reflecting performance with a smaller blending amount than the case where a filler other than titanium oxide is used. Further, when titanium oxide is used, a film having a high reflecting performance can be obtained even with a small film thickness.

Examples of the titanium oxides used in the present invention include titanium oxides of crystal forms such as anatase type titanium oxide and rutile type titanium oxide. From the viewpoint of increasing the difference in refractive index from the base resin, the titanium oxide is preferably one having a refractive index of 2.7 or more, for example, of a crystal form of rutile type titanium oxide.

To impart a film with a high light reflecting property, it is necessary to use titanium oxide that has a low light absorption capacitance to visible light. To decrease the light absorption capacitance of titanium oxide to visible light, it is preferable that the amount of coloring elements contained in the titanium oxide is small. In particular, by setting the content of niobium to 500 ppm or less, a reflective film having a high light reflecting property can be obtained.

Titanium oxides that can be used in the present invention include titanium oxide produced by a chlorine process and titanium oxide produced by a sulfuric acid process. Of these, titanium oxide produced by the chlorine process has a high purity; for example, it is easy to set the content of niobium in the titanium oxide to 500 ppm or less, which is advantageous for the reflective film of the present invention.

In the chlorine process, rutile ore or synthetic rutile that is composed mainly of titanium oxide is allowed to react with chlorine gas in a high temperature oven at about 1,000˚C to generate titanium tetrachloride first. Then, burning the titanium tetrachloride with oxygen can afford titanium oxide having a niobium content of 500 ppm or less.

Preferably, the grains of the titanium oxide used in the present invention have a surface coated with at least one inert inorganic oxide selected from the group consisting of silica, alumina, and zirconia. To increase the light-resistance of the film or suppress photocatalytic activity of titanium oxide, it is preferable that the surface of the grains of the titanium oxide is covered with the inert inorganic oxide. Use of at least one selected from the group consisting of silica, alumina, and zirconia as the inert inorganic oxide is preferable, since in such occasion, the high light reflecting property of titanium oxide is not deteriorated. Further, it is more preferable that two or more of the inert inorganic oxides is used in combination. Among these, combinations of a plurality of inert inorganic oxides containing silica as an essential component are particularly preferable.

In the present invention, when the surface of titanium oxide is surface-treated with the inert inorganic oxide, the surface treatment amount of the surface of titanium oxide grains is preferably 3 mass% or more and 9 mass% or less. When the surface treatment amount is 3 mass% or more, it is easy to retain high light reflecting property while it is 9 mass% or less, the dispersibility of titanium oxide in the aliphatic polyester-based resin is good to provide a homogenous film. Here, "surface treatment amount" means a value obtained by dividing the mass of the inert inorganic oxide that covers the surface of titanium oxide grains by the total mass of titanium oxide subjected to various surface treatments with the inert inorganic oxide and the following inorganic compounds and organic compounds for increasing dispersibility; it is indicated as an average value in percentage (%).

Further, to improve the dispersibility of titanium oxide into the resin, the surface of the grains of titanium oxide maybe surface-treatedwith at least one inorganic compound selected from the group consisting of, for example, siloxane compounds and silane coupling agents, or at least one organic compound selected from the group consisting of, for example, polyols and polyethylene glycol.

Preferably, the titanium oxide used in the present invention has a particle diameter of 0.1 $\mu$m or more and 1.0 $\mu$m or less, more preferably 0.2 $\mu$m or more and 0.5 $\mu$m or less. When the particle diameter of the titanium oxide is 0.1 $\mu$m or more, the dispersibility of the titanium oxide in the aliphatic polyester-based resin is good, so that a uniform film can be obtained therefrom. On the other hand, when the particle diameter of the titanium oxide is 1.0 $\mu$m or less, the boundary surface between the aliphatic polyester-based resin and the titanium oxide is formed densely, so that the reflective films can be imparted a high light reflecting property.

In the present invention, other fine powder fillers that can be used together with titanium oxide include organic fine powders and inorganic fine powders.

Preferably, the organic fine powder is at least one member selected from, for example, cellulose-based powders such as wood powder and pulp powder, polymer beads, and hollow polymer beads.

Preferably, the inorganic fine powder is at least one member selected from, for example, calcium carbonate, magnesium carbonate, barium carbonate, magnesium sulfate, barium sulfate, calcium sulfate, zinc oxide, magnesium oxide, calcium oxide, alumina, aluminum hydroxide, hydroxyapatite, silica, mica, talc, kaolin, clay, glass powder, asbestos powder, zeolite, and silicate clay. Taking the light reflecting properties of the obtained film into consideration, the fine powder filler preferably has a large difference in refractive index from the base resin that constitutes the film. That is, the inorganic fine powder preferably has a high refractive index. Specifically, it is more preferable to use calcium carbonate, barium sulfate, or zinc oxide each having a refractive index of 1.6 or more.

To improve the dispersibility of the fine powder filler other than titanium oxide in the resin, those other fine powder fillers whose surface has been treated with a silicone-based compound, a polyhydric alcohol-based compound, an amine-based compound, a fatty acid, a fatty acid ester or the like may be used.

The other fine powder filler used in the present invention preferably has a particle diameter of 0. 05 $\mu$m or more and 15$\mu$m or less, more preferably 0.1 $\mu$m or more and 10 $\mu$m or less. When the particle diameter of the other fine powder filler is 0.05 $\mu$m or more, the dispersibility of the other fine powder filler in the aliphatic polyester-based resin does not decrease, so that a uniform film can be obtained therefrom. On the other hand, when the particle diameter of the other fine powder filler is 15 $\mu$m or less, the voids formed are not coarse, so that films having a high reflectance can be obtained.

Preferably, the fine powder filler composed mainly of titanium oxide is blended in the aliphatic polyester-based resin in a dispersed manner. The content of the fine powder filler in the reflective film of the present invention, taking into consideration, for example, the light reflecting properties, mechanical properties, and productivity of the film, is preferably 10 mass% or more and 60 mass% or less, more preferably 10 mass% or more and 55 mass% or less, and particularly preferably 20 mass% or more and 50 mass% or less based on the total mass of the aliphatic polyester-based resin composition that is Used for forming the reflective film. When the content of the fine powder filler is 10 mass% or more, a sufficient area of interface between the resin and the fine powder filler can be ensured, so that the film can be imparted with high light reflecting properties. On the other hand, when the content of the fine powder filler is 60 mass% or less, the mechanical properties that are necessary for films can be ensured.

From the viewpoint of reflectance, it is preferable that the aliphatic polyester-based resin reflective film of the present invention has voids inside of the film such that the film has a void ratio (a ratio in which the voids occupy in the film) of 50% or less of a total volume of the film. In the present invention, the fine powder filler contained in an effectively dispersed state in the inside of the film realizes excellent reflectance.

When the aliphatic polyester-based resin reflective film of the present invention has voids in the film, it is preferable that the ratio of the voids occupied in the film (porosity) is in the range of 5% or more and 50% or less. More preferably, the porosity is 20% or more and particularly preferably 30% or more. When the porosity is more than 50%, the mechanical strength of the film decrease, so that the film may be broken during film production or the durability of the film such as heat resistance may be insufficient when in use. For example, voids can be formed in a film by drawing the film after addition of the fine powder filler to the composition for producing the film.

In the present invention, titanium oxide with a niobium content of 500 ppm or less is mainly used as the fine powder filler, so that high light reflecting property can be achieved even when the film has a low porosity and a high reflectance can be obtained when there is no void inside the film. Presumably, this is because the features of titanium oxide, i.e., high refractive index and high opacifying property are effectively exhibited. If usage of the filler can be decreased, the number of voids formed by drawing is also decreased, so that the mechanical properties of the film can be improved while maintaining the high reflecting performance of the film. Further, even if usage of the filler is large, when the drawing ratio can be kept down and as a result the number of voids formed by drawing can be decrease, the mechanical properties of the film can be improved. These properties are advantageous also for increasing the dimension stability of the film. Further, if a high reflecting performance is secured even when the film is thin, the film can be used as a reflective film for use in a small, thin liquid crystal display in a notebook type personal computer, cellular phone, etc.

The base resin that constitutes the reflective film of the present invention preferably has a refractive index (n) of less than 1.52. In the present invention, it is preferable to use an aliphatic polyester-based resin having a refractive index (n) of less than 1.52.

Further, Resins having a refractive index (n) of less than 1.52 are more preferably polylactic acid-based resins, which are aliphatic-based resins that contain no aromatic rings. Resins containing aromatic rings, for example, aromatic-based resins have a refractive index of about 1.55 or more.

In the case of the reflective film that contains fine powder filler such as titanium oxide in the film, the light reflecting properties are imparted by making use of inflection and scattering of light at the boundary surface between the resins constituting the film and the fine powder fillers. The inflection and scattering become greater with an increasing difference in refractive index between the resin that constitutes the film and the fine powder filler. Therefore, the resin used in the present invention is preferably a resin that has a refractive index smaller than that of the fine powder filler. Specifically, an aliphatic polyester-based resin having a refractive index of less than 1.52 is preferable and a lactic aced-based resin having a refractive index of less than 1.46 is more preferable.

The aliphatic polyester-based resins contain no aromatic rings in the molecular chain and hence does not absorb ultraviolet rays. Therefore, films do not deteriorate and yellow with ultraviolet rays generated from a light source in liquid crystal display devises and the like, so that the light reflecting property is not decreased.

The aliphatic polyester-based resins that can be used include those chemically synthesized, those synthesized by fermentation by microorganisms and mixtures of these. Examples of the chemically synthesized aliphatic polyester-based resins include poly(ε-caprolactam) obtained by ring-opening polymerization of lactone, polyethylene adipate obtained by polymerization of a dibasic acid and a diol, polyethylene azelate, polytetramethylene succinate, cyclohexanedicarboxylic acid/cyclohexanedimethanol condensation products, polylactic acids obtained by polymerizing hydroxycarboxylic acid, polyglycols, and aliphatic polyesters obtained by substituting a portion, for example, 50% or less of ester bonds in the above-mentioned aliphatic polyesters has been replaced by one or more of, for example, a amido bond, an ether bond, and a urethane bond. Further, the aliphatic polyester-based resins synthesized by fermentation by microorganisms include polyhydroxybutyrate, copolymers of hydroxybutyrate and hydroxyvalerate.

In the present invention, the term "lactic acid-based resins" means homopolymers of D-lactic acid or L-lactic acid, or copolymers of these. Specifically, the lactic acid-based resins include poly(D-lactic acid) whose structural unit is D-lactic acid, poly(L-lactic acid) whose structural unit is L-lactic acid, and further, poly(DL-lactic acid) that is copolymers of L-lactic acid and D-lactic acid, and mixtures of these.

Aliphatic polyester-based resins including lactic acid-based resins contain no aromatic rings in the molecular chain thereof and hence do not absorb ultraviolet rays. Therefore, the reflective films made therefrom do not deteriorate or yellow, thus causing no decrease in reflectance of the film.

The lactic acid-based resins can be produced by known methods, such a condensation polymerization method and a ring-opening polymerization method. For example, according to the condensation polymerization method, D-lactic acid, L-lactic acid, or mixtures of these are directly subjected to condensation polymerization with dehydration to obtain lactic acid-based resins having a desired composition. Further, in the case of ring-opening polymerization method, lactic acid-based resin having any desired composition can be obtained from a lactide which is a cyclic dimer of lactic acid in the presence of a predetermined catalyst and using a modifier for polymerization as necessary. The lactides include L-lactide, which is a dimer of L-lactic acid, D-lactide which is a dimer of D-lactic acid, and DL-lactide which consists of D-lactic acid and L-lactic acid. These can be mixed as necessary and polymerized to obtain lactic acid-based resins having any desired composition and crystallinity.

The lactic acid-based resins used in the present invention preferably have a compositional ratio of D-lactic acid to L-lactic acid such that D-lactic acid:L-lactic acid = 100:0 to 85:15, or D-lactic acid:L-lactic acid = 0:100 to 15:85, more preferably D-lactic acid:L-lactic acid = 99.5:0.5 to 95:5, or D-lactic acid:L-lactic acid = 0.5:99.5 to 5:95. The lactic acid-based resins having a compositional ratio of D-lactic acid to L-lactic acid of 100:0 or 0:100 tend to have very high crystallinity, high melting point, and excellent heat resistance and excellent mechanical properties. That is, such lactic acid-based resins are preferable since upon drawing or heat-treating a film formed from the resins, the resins crystallize to improve the heat resistance and mechanical properties. On the other hand, the lactic acid-based resins made of D-lactic acid and L-lactic acid are preferable since they are imparted therewith flexibility and films obtained therefrom have improved molding stability and drawing stability. Therefore, taking into consideration the balance between the heat resistance of and the molding stability and drawing stability of the obtained film, it is more preferable that the lactic acid-based resins have a compositional ratio of D-lactic acid to L-lactic acid such that D-lactic acid:L-lactic acid = 99.5:0.5 to 95:5, or D-lactic acid:L-lactic acid = 0.5:99.5 to 5:95.

In the present invention, lactic acid-based resins with different copolymerization ratios of D-lactic acid to L-lactic acid may be blended. In this case, adjustment of the compositional ratios of D-lactic acid to L-lactic acid such that an average value of the compositional ratios of a plurality of lactic acid-based resins falls within the above-mentioned ranges of the compositional ratio can provide the above-mentioned balanced properties. Blending homopolymers of D-lactic acid and L-lactic acid and copolymers thereof makes it possible to have bleed stability and development of heat resistance well balanced.

The lactic acid-based resins used in the present invention preferably have high molecular weights, for example, weight-average molecular weights of 50,000 or more, more preferably 60,000 or more and 400,000 or less, particulary preferably 100,000 or more and 300,000 or less. When the lactic acid-based resin has a weight-average molecular weight of less than 50,000, the obtained film may have poor mechanical properties.

In recent years, liquid crystal displays have been used as displays for not only personal computers but also car navigation systems and car-mounted small television sets, so that those liquid crystal displays that are resistant to high temperatures and high humidities are demanded. Thus, to increase the light-resistance of the film, it is preferable that aliphatic polyester-based resin reflective films contain a hydrolysis preventing agent.

The hydrolysis preventing agents that can be used advantageously in the present invention include carbodiimide compounds. Preferred examples of the carbodiimide compounds include those having a basic structure represented by the following general formula:

$$-(N=C=N-R-)_n-$$

In the above formula, n is an integer of 1 or more, and R represents an organic linking unit. R may be, for example, an aliphatic linking unit, an alicyclic linking unit, or an aromatic linking unit. n is selected appropriately from integers of 1 to 50.

Specific examples of the carbodiimide compound include bis(dipropylphenyl)carbodiimide, poly(4,4'-diphenylmethanecarbodiimide), poly(p-phenylenecarbodiimide), poly(m-phenylenecarbodiimide), poly(tolylcarbodiimide), poly(diisopropylphenylenecarbodiimide), poly(methyl-diisopropylphenylenecarbodiimide), and poly(triisopropylphenylenecarbodiimide), as well as corresponding monomers. These carbodiimide compounds may be used singly or as combinations of two or more of them.

In the present invention, it is preferable that 0.1 to 3.0 mass parts of the carbodiimide compound are added to per 100 mass parts of the aliphatic polyester-based resin that constitutes a film. When the content of the carbodiimide compound is 0.1 mass part or more per 100 mass parts of the aliphatic polyester-based resin, the obtained film exhibits a sufficiently improved hydrolysis resistance. When the content of the carbodiimide compound is 3.0 mass parts or less per 100 mass parts of the aliphatic polyester-based resin, the obtained film is less colored to have a high light reflecting properties.

The aliphatic polyester-based resin reflective film of the present invention may further contain antioxidants, light stabilizers, heat stabilizers, lubricants, dispersants, ultraviolet absorbents, white pigments, fluorescent brighteners, and other additives so far as they do not damage the effects of the present invention.

Further, the aliphatic polyester-based resin reflective film of the present invention preferably has an average reflectance of 95% or more, more preferably 97% or more at a wavelength of 550 nm. When the average reflectance is 95% or more, the film exhibits good reflecting properties and can provide sufficient brightness to the screen of liquid crystal displays and the like.

The aliphatic polyester-based resin reflective film of the present invention can retain an excellent average reflectance even after it is exposed to ultraviolet rays.

In cars parking under the scorching sun in summer seasons, car navigation systems, car-mounted small television sets and the like are exposed to high temperatures. Further, when a liquid crystal displaying device is used for a long period of time, the periphery of the light source lamp is exposed high temperatures. Accordingly, the reflective film used in liquid crystal displays for use in car navigation systems, liquid crystal display devices and the like is required to have heat resistance to temperatures at about 110°C. That is, the reflective film has a heat shrinkage ratio of, preferably 10% or less, more preferably 5% or less when the film is left to stand at a temperature of 120°C for 5 minutes. When the film has a heat shrinkage ratio of more than 10%, the film may cause shrinkage with a lapse of time when used at high temperatures, and in the case of the reflective film that is laminated on a steel plate or the like, the film alone may be deformed. The film that underwent severe shrinkage may have a decreased surface area for reflection or a reduced porosity within the film, resulting in a decreased reflectance.

To prevent heat shrinkage, it is desirable to allow the crystallization of the film to proceed completely. Since it is difficult to promote the crystallization of the aliphatic polyester-based resin reflective film completely by biaxial drawing only, it is preferable in the present invention that heat fixation treatment be performed after drawing. By promoting the crystallization of the film, it is possible to impart the film with heat resistance and improve the resistance to hydrolysis of the film.

The aliphatic polyester-based resin reflective film of the present invention can be degraded by, for example, microorganisms when subjected to earth filling, thus causing no problems of wastes. When aliphatic polyester-based resins are subjected earth filling, the ester bonds in the resin are hydrolyzed to reduce the molecular weight of the resin to about 1,000 and the resultant is subsequently biodegraded by microorganisms in the soil.

On the other hand, the aromatic polyester-based resin has high bond stability in the molecule, so that hydrolysis of the ester bonds can hardly take place. Therefore, when the aromatic polyester-based resin are subjected to earth filling, neither their molecular weight is reduced nor their biodegradation by, for example, microorganisms occurs. As a result, various problems occur. For example, the aromatic polyester-based resins remain in the soil for a long time to make the service life of the landfill shorter, and natural landscape and life environment of wild animals and plants are damaged.

Hereinafter, an example of the method of producing an aliphatic polyester-based resin reflective film of the present invention is explained. However, the present invention should not be considered to be limited thereto.

First, an aliphatic polyester-based resin composition is prepared by blending an aliphatic polyester-based resin with a fine powder filler composed mainly of titanium oxide with a niobium content of 500 ppm or less, and a hydrolysis preventing agent as well as other additives as necessary.

More particularly, the fine powder filler composed mainly of titanium oxide with a niobium content of 500 ppm or less, and the hydrolysis preventing agent and so on as necessary are added to the aliphatic polyester-based resin. The resultant is mixed in a ribbon blender, a tumbler, a Henschel mixer or the like and then kneaded using a Banbury mixer, a single-screw or a twin-screw extruder or the like at a temperature equal to or higher than the melting temperature of the resin (for example, 170˚C to 230˚C in the case of polylactic acid) to give an aliphatic polyester-based resin composition. Alternatively, an aliphatic polyester-based resin composition can be obtained by supplying the aliphatic polyester-based resin, the fine powder filler composed mainly of titanium oxide with a niobium content of 500 ppm or less, and the hydrolysis preventing agent and so on to the mixer or the like via separate feeders in respective predetermined amounts. Further, the aliphatic polyester-based resin composition can also be obtained by preparing in advance a master batch obtained by blending a portion of the aliphatic polyester-based resin with the fine powder filler composed mainly of titanium oxide with a niobium content of 500 ppm or less, and the hydrolysis preventing agent and so on in large concentrations, and mixing the master batch with another portion of the aliphatic polyester-based resin to desired concentrations of the components.

Then, the aliphatic polyester-based resin composition thus obtained is melted and formed into a film. For example, the aliphatic polyester-based resin composition is dried and then supplied to an extruder, heated to a temperature equal to or higher than the melting temperature of the resin for melting. Alternatively, the aliphatic polyester-based resin composition can be supplied to the extruder without drying . When the aliphatic polyester-based resin composition is not dried, it is preferable that a vacuum vent be used when it is melt-extruded.

The conditions of extrusion such as extrusion temperature must be set taking into consideration factors, for example, a reduction in molecular weight of the resin due to decomposition. For example, the extrusion temperature is preferably in the range of 170˚C to 230˚C for polylactic acid. Thereafter, the molten aliphatic polyester-based resin composition is extruded from a slit-shaped discharge nozzle of a T-die and contacted with a cooling roll to solidify the composition to form a cast sheet.

The aliphatic polyester-based resin reflective film of the present invention can also be obtained by melt-forming a resin composition obtained by blending the aliphatic polyester-based resin and the fine powder filler composed mainly of titanium oxide with a niobium content of 500 ppm or less into a film and then drawing the film at least monoaxially at a drawing ratio of 1.1-folds ormore. Drawing of the film results in formation of voids around titanium oxide grains inside the film, which further increases light reflecting properties of the film and thus is preferable. Presumably, this is because interfaces between the resin and voids and interfaces between the voids and titanium oxide grains are newly formed and the effect of inflection and scattering of light at the interfaces will increase.

In the case where the aliphatic polyester-based resin reflective film of the present invention has pores therein, it is preferable to draw the obtained cast sheet to 5 times or more, more preferably 7 times or more as compared with the original size in terms of area magnification. By drawing the cast sheet 5 times or more in area magnification, a porosity of 5% or more can be realized in the film. By drawing the cast sheet 7 times or more in area magnification, a porosity of 20% or more can be realized. Further, by drawing the cast sheet 7.5 times or more in area magnification, a porosity of 30% or more can be realized.

It is preferable that the reflective film of the present invention is further drawn biaxially. By performing biaxial drawing, a film having a higher porosity can be obtained in a stable manner, with the result that the light reflectance of the film can be increased.

When the film is drawn monoaxially, voids formed are in the form of fibers extending in one direction while in the case of biaxial drawing, voids formed are in the form of disks elongated vertically and horizontally. That is, biaxial drawing results in an increase in peel-off area at the interfaces between the resin and the titanium oxide grains, which in turn leads to whitening of the film. As a result, the light reflectance of the film is increased.

In the case where the reflective film is required to have heat resistance, the biaxial drawing is preferable since when the film is drawn biaxially, heterogeneity in the direction in which the film is shrunk disappears. Further, biaxial drawing of the film results in an increase in the mechanical strength of the film.

The drawing temperature at which a cast sheet is drawn is preferably a temperature in a range of between about the glass transition temperature (Tg) of the base resin that constitutes the sheet and about (Tg + 50˚C), for example, 50˚C or more and 90˚C or less in the case where the base resin is, for example, polylactic acid. When the drawing temperature is within this range, the film is not broken during drawing, drawing can be performed in a highly oriented state, and high porosity can be obtained, so that a film having a high ref lectance can be obtained.

For example, by drawing the aliphatic polyester-based resin film of the present invention at a draw ratio appropriately selected, pores are formed in the film. This is because the aliphatic polyester-based resin and the fine powder filler behave differently during drawing. More particularly, when drawing is performed at a temperature suitable for the aliphatic polyester-based resin, the aliphatic polyester-based resin as a matrix is drawn in contrast to the fine powder filler that tends to remain as is, with the result that the separation of the aliphatic polyester-based resin from the fine powder filler occurs at the boundary therebetween to form pores. With only monoaxial drawing of the film, the formed pores are in the form of fibers extending in one direction. On the other hand, biaxial drawing of the film gives rise to pores extending in both the longitudinal and transverse directions to give pores in the form of disks. In other words, biaxial drawing increases separation area at the boundary between the aliphatic polyester-based resin and the fine powder filler to make whitening of the film to proceed. As a result, the film has an excellent reflectance as a reflective film.

The order of drawing in biaxial drawing is not particularly limited. For example, either simultaneous biaxial drawing or sequential biaxial drawing may be used. After melt-formation of film using a drawing installation, either drawing of the film in an MD direction by roll drawing and subsequent drawing in a TD direction by tenter drawing, or biaxial drawing by tubular drawing may be performed.

In the present invention, to impart the aliphatic polyester-based resin reflective film with heat resistance and dimensional stability, it is preferable that heat fixation be performed after the drawing.
The processing temperature for heat fixation of the film is preferably 90°C to 160°C, more preferably 110°C to 140°C. Time required for heat fixation is preferably 1 second to 5 minutes. The drawing installation is not particularly limited. However, it is preferable that tenter drawing, in which heat fixation can be performed after drawing, be performed.

The thickness of the aliphatic polyester-based resin reflective film is not particularly limited. The thickness is usually 30 $\mu$m to 500 $\mu$m and preferably about 50 $\mu$m to about 500 $\mu$m taking into consideration of handleability in practical applications. In particular, the thickness of a reflective film for use as a small, thin reflective plate is preferably 30 $\mu$m to 100 $\mu$m. Reflective films having such a thickness can be used in small, thin liquid crystal displays in, for example, notebook-type personal computers and mobile phones and the like.

The reflective film of the present invention may be either of a single-layer (monolayer) structure or a multi-layer structure which has laminated two or more layers.

The aliphatic polyester-based resin reflective film of the present invention can be used to form a reflective plate in liquid crystal displays and the like. For example, the aliphatic polyester-based resin reflective film can be applied to a metal plate or a resin plate to form a reflective plate. The reflective plate is useful as a reflective plate for use in liquid crystal display devices, lighting apparatus, illumination advertising displays. Hereinafter, an example of a method of producing such a reflective plate is explained. However, the present invention should not be considered to be limited thereto.

The methods of covering a metal plate or a resin plate with the reflective film of the present invention include a method that involves use of an adhesive, a method of heat sealing without using adhesives, a method of bonding through an adhesive sheet, a method of extrusion coating and so on and is not particularly limited. For example, the reflective film can be attached to a metal or resin plate by coating an adhesive made of polyester-based, polyurethane-based, epoxy-basedresin or the like on a side of the metal or resin plate on which the reflective film is to be attached and then applying the reflective film on the adhesive. In this method, the adhesive is coated on the surface of the metal plate or the like to which the reflective film is to be applied to a thickness of about 2 $\mu$m to about 4 $\mu$m after drying by using a coating installation usually used, such as a reverse roll coater or a kiss roll coater. Then, the coated surface is dried and heated by an infrared ray heater and a hot-air heating oven to maintain the surface of the plate at a predetermined temperature while the reflective film is applied immediately to the metal or resin plate by using a roll laminator, followed by cooling to obtain a reflective plate. In this case, it is preferable to maintain the surface of the metal plate or the like at 210°C or less, since light reflecting properties of the reflective plate can be maintained at high levels.

EXAMPLE

Hereinafter, the present invention is explained in more detail by examples. However, the present invention should not be considered to be limited thereto. Instead, various applications or modifications may be made without departing the technical concept of the present invention. Measurements and evaluations in the following examples were performed as follows. Here, the direction in which the film is taken up (direction of flow of film) is indicated by MD and the direction perpendicular thereto is indicated by TD.

(Measurement and evaluation methods)

(1) Refractive index

The refractive index of a resin was measured according to Method A of JIS K-7142.

(2) Niobium content (ppm) of titanium oxide

Niobium contents were measured according to JIS M-8321 "Titanium Ore - Niobium Quantitation Method]. That is, 0.5 g of a sample was weighed. The sample was transferred into a crucible made of nickel in which 5 g of a fusion aid [sodium hydroxide : sodium peroxide = 1:2 (by mass)] was charged in advance. After mixing, the surface of the sample was covered with about 2 g of anhydrous sodium carbonate and the sample was heat-melted to form a melt. After the melt was cooled in the crucible, 100 ml of hot water and 50 ml of hydrochloric acid were portionwise added to the melt to dissolve it. Further, water was added to make 250 ml. The obtained solution was measured on an ICP (Inductively-Coupled Plasma) optical emission spectrometer to obtain a niobium content. Measurement wavelength was 309.42 nm.

(3) Average Particle Diameter

By using a powder specific surface measuring apparatus (permeation method), model "SS-100" manufactured by Shimadzu Corporation with a sample tube of 2 cm$^2$ in cross section and 1 cm in height, measurement of time in which 20 cc of air was permeated through a 3-g sample packed in the sample tube at 500 mm $H_2O$ was repeated and an average particle diameter of the sample was calculated from the measured values.

(4) Porosity (%)

The density of a film before drawing (indicated as "undrawn film density") and the density of the film after drawing (indicated as "drawn film density") were measured and the measured values were assigned in the following equation to obtain the porosity of the film.

```
Porosity (%) = {(Undrawn film density - Drawn film
density)/Undrawn film density} × 100
```

(5) Reflectance (%)

By using a spectrophotometer ("U-4000", manufactured by Hitachi, Ltd.) with an integrating sphere, reflectance of a sample film for light at a wavelength of 550 nm was measured. In this case, the spectrophotometer was set before the measurement so that the reflectance of the alumina white plate was 100%.

(6) Hydrolysis resistance

In a homeostatic tank held at a temperature of 60°C and a relative humidity of 95% RH, a film was left to stand for 1, 000 hours, and then a weight-average molecular weight of the aliphatic polyester-based resin constituting the film was measured. The measured values were assigned in the following equation to obtain a molecular weight retention ratio (%), and evaluated for hydrolysis resistance based on the criteria set out below. Symbols "○" and "△" indicate that the values are equal to or higher than practical levels.

```
Molecular weight retention ratio (%) =
(Weight-average molecular weight after standing /
Weight-average molecular weight before standing) × 100
```

Criteria of evaluation:

○: Molecular weight retention ratio of 90% or more;
△: Molecular weight retention ratio of 60% or more and less than 90%;

X: Molecular weight retention ratio of less than 60%.

(7) Yellowing preventing properties

Film samples were irradiated with ultraviolet rays for 1,000 hours in a sunshine weatherometer tester (without intermittent spray of water). Thereafter, the film samples were observed with naked eye. By visual judgment, the film sample of which the color of the film surface was judged to be white was indicated as "white", and the film sample of which the color of the film surface was judged to be yellow was indicated as "yellow".
Also, film samples after irradiation of ultraviolet rays were determined for reflectance (%) was obtained according to the measurement method described in (5) above.

(8) Shape Stability

The shape stability of a film was evaluated by the following deadfold property tests.
That is, first, sample films of 20 mm wide and 150 mm long were cut out taking the longitudinal direction of the film as a width direction and the direction perpendicular thereto as a length direction. One of the shorter sides of the sample film thus obtained was held and another shorter side of the film (the other end), which was free, was folded at an angle of 180˚ at a position of 30 mm from the other end so that the straight line at this position constituted an outer folding line (or an inner folding line), and then a load of 0.15 MPa was applied. After applying a load of 0.15 MPa for 0.5 second, the load was immediately removed, the folded portion was opened, and the other end of the film sample was held by the hand and returned to the original position. Then, the film sample was released from the hand. Subsequently, an angle of the other end that was retained by the folding was measured. That is, an angle formed by the other end with respect to its original position when released from the hand was measured by a protractor. The obtained value is 180˚ at most and 0˚ at least. Larger values mean more excellent deadfold properties, namely excellent shape stability.

(9) Processability of reflective plate

Evaluation was made on three items, that is, right angle bending (R = 0 mm), screw contact bending, and square type Erichsen (5 mm) based on the following criteria.
Evaluation criteria:

    ○: No peel-off of film occurred;
    ×: Peel-off of film occurred.

(10) Reflectance of reflective plate

Reflective plates were measured for reflectance (%) by using the same measuring method as described in (5) reflectance above.

[Example 1]

Pellets of lactic acid-based resin (NW4032D: manufactured by Cargill Dow Polymer, D-form content of 1.5%) having a weight-average molecular weight of 200, 000 and titanium oxide (Tipaque PF-740: manufactured by Ishihara Sangyo Kaisha, Limited) having an average particle diameter of 0.25 μm were mixed in a ratio of 50 mass%/50 mass% to form a mixture. 3 mass parts of a hydrolysis preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and lactic acid-based resin were mixed in a ratio such that master batch:lactic acid-based resin = 40 mass%:60 mass% to prepare an aliphatic polyester-based resin composition.
Thereafter, the aliphatic polyester-based resin composition was extruded through a T-die at 220˚C by using a single-screw extruder and the resultant was cooled and solidified to form a film. The obtained film was biaxially drawn 2.5 times the original size in MD and 2.8 times the original size in TD at a temperature of 65˚C, followed by heat treatment at 140˚C to obtain a reflective film of 188-μm thick.
The obtained reflective film was measured and evaluated for porosity, reflectance before irradiation with ultraviolet rays, reflectance after irradiation with ultraviolet rays, yellowing preventing properties, hydrolysis resistance, and shape stability. The results obtained are shown in Tables 1 and 2.

[Example 2]

A reflective film having a thickness of 188 μm was prepared in the same manner as in Example 1 except that titanium oxide having an average particle diameter of 0.28 μm (Tipaque CR-95: manufactured by Ishihara Sangyo Kaisha, Limited) was used in place of titanium oxide having an average particle diameter of 0.25 μm (Tipaque PF-740: manufactured by Ishihara Sangyo Kaisha, Limited). The obtained reflective film was measured and evaluated in the same manner as in Example 1. The results obtained are shown in Tables 1 and 2.

[Example 3]

A reflective film having a thickness of 188 μm was prepared in the same manner as in Example 1 except that titanium oxide having an average particle diameter of 0.21 μm (Tipaque PF-728: manufactured by Ishihara Sangyo Kaisha, Limited) was used in place of titanium oxide having an average particle diameter of 0.25 μm (Tipaque PF-740: manufactured by Ishihara Sangyo Kaisha, Limited). The obtained reflective film was measured and evaluated in the same manner as in Example 1. The results obtained are shown in Tables 1 and 2.

[Example 4]

A reflective film having a thickness of 188 μm was prepared in the same manner as in Example 1 except that titanium oxide having an average particle diameter of 0.25 μm (Tipaque CR-50: manufactured by Ishihara Sangyo Kaisha, Limited) was used in place of titanium oxide having an average particle diameter of 0.25 μm (Tipaque PF-740: manufactured by Ishihara Sangyo Kaisha, Limited). The obtained reflective film was measured and evaluated in the same manner as in Example 1. The results obtained are shown in Tables 1 and 2.

[Example 5]

A reflective film having a thickness of 250 μm was prepared in the same manner as in Example 1. The obtained reflective film was measured and evaluated in the same manner as in Example 1. The results obtained are shown in Tables 1 and 2.

[Example 6]

A reflective film having a thickness of 80 μm was prepared in the same manner as in Example 1 except that biaxial drawing 3 times in MD and 3.2 times in TD was performed instead of drawing 2.5 times in MD and 2.8 times in TD. The obtained reflective film was measured and evaluated in the same manner as in Example 1. The results obtained are shown in Tables 1 and 2.

[Example 7]

A reflective film having a thickness of 80 μm was prepared in the same manner as in Example 6 except that the master batch and the lactic acid-based resin were mixed in a ratio of 60 mass%/40 mass% instead of 40 mass%/60 mass%. The obtained reflective film was measured and evaluated in the same manner as in Example 1. The results obtained are shown in Tables 1 and 2.

[Comparative Example 1]

Pellets of polyethylene terephthalate and titanium oxide (Tipaque PF-740: manufactured by Ishihara Sangyo Kaisha, Limited) having an average particle diameter of 0.25 μm were mixed in a ratio of 50 mass%/50 mass% to form a mixture. The mixture was pelletized through a twin-screw extruder to prepare a master batch. The master batch and polyethylene terephthalate were mixed in a ratio of 40 mass%/60 mass% to form a resin composition. Then, the obtained resin composition was extruded at 280°C through a T-die of a single-screw extruder and cooled to solidify to form a film. The obtained film was biaxially drawn 2.5 times in MD and 2.8 times in TD at a temperature of 90°C, and then heat-treated at 140°C to prepare a reflective film having a thickness of 188 μm. The obtained reflective film was measured and evaluated in the same manner as in Example 1. The results obtained are shown in Tables 1 and 2.

[Comparative Example 2]

A reflective film having a thickness of 188 μm was prepared in the same manner as in Example 1 except that titanium oxide having an average particle diameter of 0.21 μm (Tipaque R-680: manufactured by Ishihara Sangyo Kaisha, Limited) was used in place of titanium oxide having an average particle diameter of 0.25 μm (Tipaque PF-740: manufactured by Ishihara Sangyo Kaisha, Limited). The obtained reflectivd film was measured and evaluated in the same manner as in Example 1. The results obtained are shown in Tables 1 and 2.

[Comparative Example 3]

A reflective film having a thickness of 188 μm was prepared in the same manner as in Example 1 except that titanium oxide having an average particle diameter of 0.24 μm (Tipaque R-630: manufactured by Ishihara Sangyo Kaisha, Limited) was used in place of titanium oxide having an average particle diameter of 0.25 μm (Tipaque PF-740: manufactured by Ishihara Sangyo Kaisha, Limited). The obtained reflective film was measured and evaluated in the same manner as in Example 1. The results obtained are shown in Tables 1 and 2.

[Example 8]

The reflective film obtained in Example 1 was applied to a galvanized sheet metal (0.45 mm thick) by the following procedure to prepare a reflective plate. That is, first a commercially available polyester-based adhesive was coated on a surface of the steel on which the reflective film was to be applied to a thickness of adhesive of 2 to 4 μm after drying. Then, the coated surface was dried and heated by using an infrared heater and a hot-air oven. While maintaining the surface temperature of the steel at 180°C, the reflective film was immediately applied to the surface of the steel by using a roll laminator and the resultant was cooled to prepare a reflective plate. The obtained reflective plate was measured and evaluated for processability of reflective plate and reflectance of reflective plate. The results obtained are shown in Table 3.

[Example 9]

A reflective plate was prepared in the same manner as in Example 8 except that the surface temperature of the steel was maintained at 220°C instead of 180°C. The obtained reflective plate was measured and evaluated in the same manner as in Example 8. The results obtained are shown in Table 3.
[Table 1]

| | | Resin | | Titanium oxide | | | | Sheet thickness (μm) |
|---|---|---|---|---|---|---|---|---|
| | | Kind | Refractive Index | Kind | Particle Diameter (μm) | Inert inorganic oxide | Niobium content (ppm) | |
| Example | 1 | PLA | 1.45 | a | 0.25 | A, B, C | 430 | 188 |
| | 2 | PLA | 1.45 | b | 0.28 | A, B | <10 | 188 |
| | 3 | PLA | 1.45 | c | 0.21 | A, B | 150 | 188 |
| | 4 | PLA | 1.45 | d | 0.25 | A | <10 | 188 |
| | 5 | PLA | 1.45 | a | 0.25 | A, B, C | 430 | 250 |
| | 6 | PLA | 1.45 | a | 0.25 | A, B, C | 430 | 80 |
| | 7 | PLA | 1.45 | a | 0.25 | A, B, C | 430 | 80 |

(continued)

| | | Resin | | Titanium oxide | | | | Sheet thickness (μm) |
|---|---|---|---|---|---|---|---|---|
| | | Kind | Refractive Index | Kind | Particle Diameter (μm) | Inert inorganic oxide | Niobium content (ppm) | |
| Comparative Example | 1 | PET | 1.58 | a | 0.25 | A, B, C | 430 | 188 |
| | 2 | PLA | 1.45 | e | 0.21 | A | 990 | 188 |
| | 3 | PLA | 1.45 | f | 0.24 | A | 940 | 188 |
| (Kinds of Filler)<br>a: Tipaque PF-740; Rutile type crystalline titanium oxide manufactured by Ishihara Sangyo<br>b: Tipaque CR-95; Rutile type crystalline titanium oxide manufactured by Ishihara Sangyo<br>c: Tipaque PF-728; Rutile type crystalline titanium oxide manufactured by Ishihara Sangyo<br>d: Tipaque CR-50; Rutile type crystalline titanium oxide manufactured by Ishihara Sangyo<br>e: Tipaque R-680; Rutile type crystalline titanium oxide manufactured by Ishihara Sangyo<br>f: Tipaque R-630; Rutile type crystalline titanium oxide manufactured by Ishihara Sangyo (Kinds of Inert Inorganic Oxide)<br>A: Alumina<br>B: Silica<br>C: Zirconia | | | | | | | | |

[Table 2]

| | | Porosity (%) | Reflectance (%) | Hydrolysis Resistance | Yellowing Preventing Property | | Shape Stability |
|---|---|---|---|---|---|---|---|
| | | | | | Color | Reflectance | |
| Example | 1 | 15 | 97.5 | ○ | White | 96.5 | 95 |
| | 2 | 15 | 97.5 | ○ | White | 96 | 95 |
| | 3 | 15 | 97 | ○ | White | 95.5 | 95 |
| | 4 | 15 | 96.5 | ○ | White | 95 | 95 |
| | 5 | 15 | 98 | ○ | White | 96.5 | 95 |
| | 6 | 20 | 97 | ○ | White | 96 | 95 |
| | 7 | 20 | 97.5 | ○ | White | 96 | 95 |
| Comparative Example | 1 | 15 | 94 | ○ | Yellow | 89 | 36 |
| | 2 | 15 | 94.5 | ○ | White | 92.5 | 95 |
| | 3 | 15 | 94.5 | ○ | White | 92.5 | 95 |

[Table 3]

| | Processability of Reflective Plate | | | Reflective Plate Reflectance (%) |
|---|---|---|---|---|
| | Right Angle Bending | Screw Bending | Erichsen | |
| Example 8 | ○ | ○ | ○ | 97.5 |
| Example 9 | ○ | ○ | ○ | 94 |

Tables 1 and 2 indicate that the reflective films of Examples 1 to 7 of the present invention retained a reflectance of 96.5% or more, showing that they have high light reflecting property. Further, the reflective films had reflectance of 95% or more even after the irradiation with ultraviolet rays and had a color of white, thus showing excellent yellowing preventing property. Among them, the reflective films of Examples 1 to 3 and Examples 5 to 7 had a reflectance of 97% or more at an initial stage before the irradiation with ultraviolet rays and also a reflectance of 95.5% or more after the irradiation with ultraviolet rays, both being excellent. Note that the reflective films of the present invention also showed excellent results on hydrolysis resistance and shape stability.

On the other hand, it revealed that the reflective film of Comparative Examples 1 to 3 had a reflectance of less than 95% and were inferior to the reflective films of Examples 1 to 7 in view of maintaining a high light reflectance.

Table 3 indicates that the reflective plates of Example 8 retained sufficient adhesion required for processing and high reflectance. Also, comparison of the reflective plate of Example 8 with the reflective plate of Example 9 indicates that both of them had high adhesion but the reflective plate of Example 8 maintained a high reflectance and was superior in reflectance to the reflective plate of Example 9.

[Example 10]

Pellets of lactic acid-based resin (NW4032D: manufactured by Cargill Dow Polymer, D-form content of 1.5%) having a weight-average molecular weight of 200,000 and titanium oxide (Tipaque PF-728: manufactured by Ishihara Sangyo Kaisha, Limited) having an average particle diameter of 0.21 $\mu$m were mixed in a ratio of 50 mass%/50 mass% to form a mixture. 2.1 mass parts of a hydrolysis preventing agent (bis(dipropylphenyl) carbodiimide) was added to 100 mass parts of the mixture and mixed. Then, the resultant mixture was formed into pellets by using a twin-screw extruder to prepare a so-called master batch. The master batch and lactic acid-based resin were mixed in a ratio such that master batch/lactic acid-based resin = 70 mass%/30 mass% to prepare an aliphatic polyester-based resin composition.

Then, the obtained resin composition was extruded at 220°C through a T-die of a single-screw extruder and cooled to solidify to form a film. The obtained film was biaxially drawn 2.5 times in MD and 2.8 times in TD at a temperature of 65°C, and then heat-treated at 140°C to prepare a reflective film having a thickness of 200 $\mu$m. The obtained reflective film was measured and evaluated for porosity and reflectance. The results Obtained are shown in Tables 4 and 5.

[Example 11]

(Preparation of Resin Composition for Layer A)

Pellets of lactic acid-based resin (NW4032D: manufactured by Cargill Dow Polymer, D-form content of 1.5%) having a weight-average molecular weight of 200,000 and titanium oxide (Tipaque PF-740: manufactured by Ishihara Sangyo Kaisha, Limited) having an average particle diameter of 0.25 $\mu$m were mixed in a ratio of 50 mass%/50 mass% to form a mixture. 2.1 mass parts of a hydrolysis preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and lactic acid-based resin were mixed in a ratio such that master batch/lactic acid-based resin = 70 mass%/30 mass% to prepare an aliphatic polyester-based resin composition A.

(Preparation of Resin Composition for Layer B)

Pellets of lactic acid-based resin (NW4032D: manufactured by Cargill Dow Polymer, D-form content of 1.5%) having a weight-average molecular weight of 200,000 and titanium oxide (Tipaque PF-728: manufactured by Ishihara Sangyo Kaisha, Limited) having an average particle diameter of 0.21 $\mu$m were mixed in a ratio of 50 mass%/50 mass% to form a mixture. 2.1 mass parts of a hydrolysis preventing agent (bis(dipropylphenyl)carbodiimide) was added to 100 mass parts of the mixture and mixed. Then, the resultant mixture was formed into pellets by using a twin-screw extruder to prepare a so-called master batch. The master batch and lactic acid-based resin were mixed in a ratio such that master batch/lactic acid-based resin = 70 mass%/30 mass% to prepare an aliphatic polyester-based resin composition B.

(Preparation of films)

The resin composition A and the resin composition B were supplied to two extruders A and B, respectively. That is, the resin composition A was supplied to the extruder A heated to 220°C and the resin composition B was supplied to the extruder B heated to 220°C. The resin composition A in a molten state and the resin composition B in a molten state were extruded through a T-dies into sheets constituting a three-layer construction consisting of layer A/layer B/ layer A, which was cooled to solidify to obtain a film.

The obtained film was biaxially drawn 2.5 times in MD and 2.8 times in TD at 65°C. Thereafter, the film was heat-treated at 140°C to obtain a reflective film having a thickness of 200 $\mu$m (layer A: 18 $\mu$m, layer B: 164 $\mu$m).

The obtained reflective film was measured and evaluated in the same manner as in Example 10. The results obtained are shown in Tables 4 and 5.

[Example 12]

A reflective film having a thickness of 200 $\mu$m was prepared in the same manner as in Example 11 except that titanium oxide having an average particle diameter of 0. 21 $\mu$m (Tipaque PF-690: manufactured by Ishihara Sangyo Kaisha, Limited; niobium content of 500 ppm or less) was used in place of titanium oxide having an average particle diameter of 0.21 $\mu$m (Tipaque PF-728: manufactured by Ishihara Sangyo Kaisha, Limited). The obtained reflective film was measured and evaluated in the same manner as in Example 11. The results obtained are shown in Tables 4 and 5.

[Example 13]

A reflective film having a thickness of 200 $\mu$m was prepared in the same manner as in Example 10 except that titanium oxide having an average particle diameter of 0.25 $\mu$m (Tipaque CR-50-2: manufactured by Ishihara Sangyo Kaisha, Limited; niobium content of 500 ppm or less) was used in place of titanium oxide having an average particle diameter of 0.21 $\mu$m (Tipaque PF-728: manufactured by Ishihara Sangyo Kaisha, Limited). The obtained reflective film was measured and evaluated in the same manner as in Example 10. The results obtained are shown in Tables 4 and 5.

[Example 14]

A reflective film having a thickness of 200 $\mu$m was prepared in the same manner as in Example 10 except that titanium oxide having an average particle diameter of 0.21 $\mu$m (Tipaque CR-63: manufactured by Ishihara Sangyo Kaisha, Limited; niobium content of 500 ppm or less) was used in place of titanium oxide having an average particle diameter of 0.21 $\mu$m (Tipaque PF-728: manufactured by Ishihara Sangyo Kaisha, Limited). The obtained reflective film was measured and evaluated in the same manner as in Example 10. The results obtained are shown in Tables 4 and 5.

[Example 15]

A reflective film having a thickness of 200 $\mu$m was prepared in the same manner as in Example 11 except that titanium oxide having an average particle diameter of 0.25 $\mu$m (Tipaque CR-50-2: manufactured by Ishihara Sangyo Kaisha, Limited; niobium content of 500 ppm or less) was used in place of titanium oxide having an average particle diameter of 0.25 $\mu$m (Tipaque PF-740: manufactured by Ishihara Sangyo Kaisha, Limited) and that titanium oxide having an average particle diameter of 0.21$\mu$m (Tipaque PF-671: manufactured by Ishihara Sangyo Kaisha, Limited; niobium content of 500 ppm or less) was used in place of titanium oxide having an average particle diameter of 0.21 $\mu$m (Tipaque PF-728: manufactured by Ishihara Sangyo Kaisha, Limited). The obtained reflective film was measured and evaluated in the same manner as in Example 11. The results obtained are shown in Tables 4 and 5.

[Table 4]

| | | Resin | | Titanium Oxide | | | |
|---|---|---|---|---|---|---|---|
| | | Kind | Refractive Index | Kind | Average Particle Diameter ($\mu$m) | Inert Inorganic Oxide | |
| | | | | | | Kind | Treatment Amount (Mass%) |
| Example 10 | | PLA | 1.45 | b | 0.21 | A,B | 7 |
| Example 11 | Layer A | PLA | 1.45 | c | 0.25 | A,B,C | 4 |
| | Layer B | PLA | 1.45 | b | 0.21 | A,B | 7 |
| Example 12 | Layer A | PLA | 1.45 | c | 0.25 | A,B,C | 4 |
| | Layer B | PLA | 1.45 | d | 0.21 | A,B | 7 |

(continued)

| | Resin | | Titanium Oxide | | | |
|---|---|---|---|---|---|---|
| | Kind | Refractive Index | Kind | Average Particle Diameter ($\mu$m) | Inert Inorganic Oxide | |
| | | | | | Kind | Treatment Amount (Mass%) |
| Example 13 | PLA | 1.45 | e | 0.25 | A,B | 2.5 |
| Example 14 | PLA | 1.45 | f | 0.21 | A,B | 2 |
| Example 15 Layer A | PLA | 1.45 | e | 0.25 | A,B | 2.5 |
| Example 15 Layer B | PLA | 1.45 | g | 0.21 | A,B | 2 |

Kinds of Filler
b: Tipaque PF-728; Rutile type crystalline titanium oxide manufactured by Ishihara Sangyo
c: Tipaque PF-740; Rutile type crystalline titanium oxide manufactured by Ishihara Sangyo
d: Tipaque R-690; Rutile type crystalline titanium oxide manufactured by Ishihara Sangyo
e: Tipaque CR-50-2; Rutile type crystalline titanium oxide manufactured by Ishihara Sangyo
f: Tipaque CR-63; Rutile type crystalline titanium oxide manufactured by Ishihara Sangyo
g: Tipaque PF-671; Rutile type crystalline titanium oxide manufactured by Ishihara Sangyo
Kinds of Inert Inorganic Oxide
A: Alumina
B: Silica
C: Zirconia

[Table 5]

| | | Porosity (%) | Reflectance (%) |
|---|---|---|---|
| Example | 10 | 21 | 98.0 |
| | 11 | 22 | 98.0 |
| | 12 | 22 | 97.5 |
| | 13 | 21 | 96.0 |
| | 14 | 21 | 96.5 |
| | 15 | 22 | 96.0 |

Tables 4 and 5 indicate that the reflective films of Examples 10 to 15 of the present invention retained a reflectance of 96% or more, showing that they have high light reflecting properties. Further, the reflective films of Examples 10 to 12 in which the surface treatment amount with the inert inorganic oxide was 3 mass% or more and 9 mass% or less had reflectance of 97.5% or more, which is higher than the reflective films of Examples 13 to 15 in which the surface treat amount of the titanium oxide was 2.5 mass% or less.
Note that the reflective films of Examples 10 to 13 include an aliphatic polyester-based resin as a base resin, so that they underwent neither yellowing with a lapse of time when in use nor a decrease in reflectance.
As described in detail in the foregoing, according to the present invention, there can be realized a reflective film that has excellent light reflecting property, does not undergo yellowing or deterioration in the light reflectance during use but have excellent shape stability. In addition, the reflective film of the present invention has biodegradability and can be degraded by microorganisms and the like when it is subjected to earth filling, thus raising no problem of waste disposal. Use of the reflective film enables one to provide a reflective plate having the above-mentioned properties such as excellent light reflecting property.

INDUSTRIAL APPLICABILITY

The present invention is applicable to a reflective film for use in a reflective plate in liquid crystal displays, lighting equipment, illumination advertising displays and the like.

**Claims**

1.  An aliphatic polyester-based resin reflective film comprising a resin composition containing:

    an aliphatic polyester-based resin; and a fine powder filler,
    wherein the fine powder filler is composed mainly of titanium oxide,
    and wherein a content of niobium in the titanium oxide is 500 ppm or less.

2.  The aliphatic polyester-based resin reflective film according to claim 1, wherein a surface of the titanium oxide is covered with at least one inert organic oxide selected from the group consisting of silica, alumina, and zirconia.

3.  The aliphatic polyester-based resin reflective film according to claim 2, wherein the surface of the titanium oxide is covered at a surface treatment amount of 3 mass% or more and 9 mass% or less.

4.  The aliphatic polyester-based resin reflective film according to any one of claims 1 to 3, wherein the fine powder filler is contained in the aliphatic polyester-based resin composition containing the fine powder filler and the aliphatic polyester-based resin in a content of 10 mass% or more and 60 mass% or less.

5.  The aliphatic polyester-based resin reflective film according to any one of claims 1 to 4, wherein the aliphatic polyester-based resin has a refractive index of less than 1.52.

6.  The aliphatic polyester-based resin reflective film according to any one of claims 1 to 5, wherein the aliphatic polyester-based resin is a lactic acid-based resin.

7.  The aliphatic polyester-based resin reflective film according to any one of claims 1 to 6, wherein the aliphatic polyester-based resin reflective film has voids therein so that a porosity is 50% or less.

8.  The aliphatic polyester-based resin reflective film according to any one of claims 1 to 7, wherein the aliphatic polyester-based resin reflective film is prepared by melt-forming the aliphatic polyester-based resin composition containing the aliphatic polyester-based resin and the fine powder filler into a film and drawing the obtained film 1.1 times in at least monoaxially.

9.  A reflective plate, wherein the reflective plate comprises the aliphatic polyester-based resin reflective film according to any one of claims 1 to 8.

| INTERNATIONAL SEARCH REPORT | International application No. |
|---|---|
| | PCT/JP2005/013235 |

**A. CLASSIFICATION OF SUBJECT MATTER**
Int.Cl$^7$ C08J5/18, C08K9/02, C08L67/00, G02F1/1335//C08L101/16,
C08L67:04

According to International Patent Classification (IPC) or to both national classification and IPC

**B. FIELDS SEARCHED**

Minimum documentation searched (classification system followed by classification symbols)
Int.Cl$^7$ C8J5/18, C08K9/02, C08L67/00, G02F1/1335, C08L101/16

Documentation searched other than minimum documentation to the extent that such documents are included in the fields searched
Jitsuyo Shinan Koho        1922-1996   Jitsuyo Shinan Toroku Koho    1996-2005
Kokai Jitsuyo Shinan Koho   1971-2005   Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-258015 A  (YUPO CORP.),<br>11 September, 2002 (11.9.02),<br>Claims; pages 3 to 4; Par. No. [0015]; page 4,<br>Par. Nos. [0018], [0021]<br>& EP 1219410 A2<br>page 4, Par. Nos. [0023] to [0024], [0028];<br>page 5, Par. No. [0033]<br>& US 2002/0122146 A1    & CN 1362626 A | 1-9 |
| Y | JP 04-081470 A  (Tayca Corp.),<br>16 March, 1992 (16.03.92),<br>Claims; page 3, upper right column,<br>lines 6 to 18<br>(Family: none) | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September, 2005 (01.09.05) | 20 September, 2005 (20.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

| INTERNATIONAL SEARCH REPORT | International application No. |
|---|---|
| | PCT/JP2005/013235 |

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2004/024832 A1  (Ishihara Sangyo Kaisha, Ltd.), 25 March, 2004 (25.03.04), Claims; page 8, lines 10 to page 10, line 23 & EP 1541638 A1        & AU 2003257813 A1 & JP 2004-083904 A | 1-9 |
| A | JP 11-349329 A  (Mitsubishi Materials Corp.), 21 December, 1999 (21.12.99), Claims (Family: none) | 1-9 |
| P,A | JP 2004-361886 A  (Mitsubishi Plastics, Inc.), 24 December, 2004 (24.12.04), Claims (Family: none) | 1-9 |

Form PCT/ISA/210 (continuation of second sheet) (January 2004)

**EP 1 777 248 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

JP 2002138150 A

JP 4239540 A